# EUROPEAN PATENT APPLICATION

(11) **EP 3 536 482 A1**
(43) Date of publication of application: **11.09.2019**
(21) Application number: 18248220.8
(22) Date of filing: 28.12.2018
(51) Int. Cl.: B29C 64/106, B29C 64/112, B29C 64/218, B29C 64/205

(54) **THREE-DIMENSIONAL FABRICATING APPARATUS, METHOD FOR PRODUCING THREE-DIMENSIONAL OBJECT, AND CARRIER MEDIUM**

(30) Priority: 11.01.2018 JP 2018002938; 18.10.2018 JP 2018196569
(71) Applicant: Ricoh Company, Ltd., Tokyo 143-8555 (JP)
(72) Inventor: SUGIURA, Kenji, Ohta-ku, Tokyo 143-8555 (JP); NORIKANE, Yoshihiro, Ohta-ku, Tokyo 143-8555 (JP); NINOMIYA, Hiromichi, Ohta-ku, Tokyo 143-8555 (JP); SAKURAI, Yoichi, Ohta-ku, Tokyo 143-8555 (JP); MATSUBARA, Kohta, Ohta-ku, Tokyo 143-8555 (JP); KOIKE, Yuta, Ohta-ku, Tokyo 143-8555 (JP); SHIMADA, Yoshihito, Ohta-ku, Tokyo 143-8555 (JP)
(74) Representative: Watkin, Timothy Lawrence Harvey

(57) **Abstract**

A three-dimensional fabricating apparatus (10, 100) includes a forward layer fabricator (20), a backward layer fabricator (20), and a controller (500). The forward layer fabricator (20) is configured to discharge a fabrication material (301) in a forward path to form a forward fabrication layer (30). The backward layer fabricator (20) is configured to discharge a fabrication material (301) in a backward path to form a backward fabrication layer (30). The controller (500) is configured to control the forward layer fabricator (20) and the backward layer fabricator (20) so that a total discharge amount of the fabrication material (301) in the backward path is larger than a total discharge amount of the fabrication material (301) in the forward path.

## Description

### BACKGROUND

### Technical Field

The present disclosure relates to a three-dimensional fabricating apparatus, a method for producing a three-dimensional object, and a carrier medium.

### Related Art

A known three-dimensional fabricating apparatus for fabricating a three-dimensional object is a material injection fabricating system (material jet type) which discharges a fabrication material for forming a three-dimensional object in a fabrication region and cures the discharged material to form a layered object, and sequentially stacks the layered objects to form a three-dimensional object. In the material injection fabricating method, two types of materials are used: a model material and a support material for supporting the model material during fabrication.

As the material jet type 3D fabricating apparatus, for example, a three-dimensional fabricating apparatus having a roller that presses a fabrication material while rotating to scrape off an excess of the fabrication material is proposed (for example, see JP-2013-067118-A).

### SUMMARY

An object of the present disclosure is to provide a three-dimensional fabricating apparatus capable of forming a sharp end portion and capable of producing a high-definition three-dimensional object having excellent flatness and a smooth surface of a model portion after the removal of a support portion.

In an aspect of the present disclosure, there is provided a three-dimensional fabricating apparatus that includes a forward layer fabricator, a backward layer fabricator, and a controller. The forward layer fabricator is configured to discharge a fabrication material in a forward path to form a forward fabrication layer. The backward layer fabricator is configured to discharge a fabrication material in a backward path to form a backward fabrication layer. The controller is configured to control the forward layer fabricator and the backward layer fabricator so that a total discharge amount of the fabrication material in the backward path is larger than a total discharge amount of the fabrication material in the forward path.

In another aspect of the present disclosure, there is provided a method for producing a three-dimensional object that includes discharging a fabrication material in a forward path to form a forward fabrication layer; discharging a fabrication material in a backward path to form a backward fabrication layer; and adjusting a total discharge amount of the fabrication material in the backward path to be larger than a total discharge amount of the fabrication material in the forward path.

In still another aspect of the present disclosure, there is provided a carrier medium carrying computer readable code for controlling a computer to carry out the above-described method.

According to the present disclosure, a three-dimensional fabricating apparatus can be provided that is capable of forming a sharp end portion and capable of producing a high-definition three-dimensional object having excellent flatness and a smooth surface of a model portion after the removal of a support portion.

### BRIEF DESCRIPTION OF THE DRAWINGS

The aforementioned and other aspects, features, and advantages of the present disclosure would be better understood by reference to the following detailed description when considered in connection with the accompanying drawings, wherein:
FIGS. 1A to 1G are schematic views illustrating an example of a method for producing a three-dimensional object using a three-dimensional fabricating apparatus according to an embodiment of the present disclosure;
FIG. 2 is a schematic view illustrating a backward fabrication material and a flattening roller in the stage after FIG. IE;
FIG. 3 is a view illustrating a state where the flattening roller scrapes off the surface of the excess backward fabrication material in the stage after FIG. IE;
FIG. 4 is a schematic view illustrating the flattening roller and the backward fabrication material in the case of having a roller scraping gap ratio of 12% in the stage after FIG. IE;
FIG. 5 is a schematic view illustrating the flattening roller and the backward fabrication material in the case of having a roller scraping gap ratio of 30% in the stage after FIG. IE;
FIG. 6 is a schematic view illustrating the flattening roller and the backward fabrication material in the case of having a roller scraping gap ratio of 4% in the stage after FIG. IE;
FIG. 7 is a schematic view illustrating the flattening roller and the backward fabrication material in the case of having a roller scraping gap ratio of 0% in the stage after FIG. IE;
FIG. 8A is an enlarged photograph of an end portion of a three-dimensional object fabricated with a roller scraping gap ratio of 0%;
FIG. 8B is an enlarged photograph of an end portion of a three-dimensional object fabricated with a roller scraping gap ratio of 12%;
FIG. 8C is an enlarged photograph of an end portion of a three-dimensional object fabricated with a roller scraping gap ratio of 30%;
FIG. 9 is a graph illustrating a relationship between the radius of a virtual circle overlapping with the end portion of the three-dimensional object and the roller scraping gap ratio;
FIGS. 10A and 10B are schematic diagrams illustrating a method including: setting a pulse voltage of a droplet of a backward fabrication material to equal to or more than a pulse voltage of a droplet of a forward fabrication material to enlarge the droplet of the backward fabrication material;
FIG. 11 is a graph illustrating a relationship between the droplets (weight of fabrication material) of a fabrication material and the pulse voltage;
FIG. 12 is a graph of a relationship between pulse voltage and film thickness;
FIG. 13 is a graph of a relationship between discharge amount of the backward path and film thickness;
FIGS. 14A and 14B are diagrams illustrating a method including: setting a pulse number of a droplet of a backward fabrication material before impact to equal to or more than a pulse number of a droplet of a forward fabrication material before impact, and uniting a plurality of droplets of the backward fabrication material during flying to enlarge the droplet of the backward fabrication material.
FIG. 15 is an example of a front view illustrating the main portion of the three-dimensional fabricating apparatus;
FIG. 16 is an example of a plan view illustrating the main portion of the three-dimensional fabricating apparatus;
FIG. 17 is an example of a side view illustrating the main portion of the three-dimensional fabricating apparatus;
FIG. 18 is a schematic view of fabrication layers formed by discharging a fabrication material while changing the nozzle position in reciprocal movement;
FIG. 19 is a block diagram illustrating a controller of the three-dimensional fabricating apparatus;
FIG. 20 is a diagram illustrating an example of a functional configuration of the three-dimensional fabricating apparatus;
FIG. 21 is a flowchart illustrating a processing procedure of a three-dimensional fabricating program in a controller of the three-dimensional fabricating apparatus.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION OF EMBODIMENTS

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Referring now to the drawings, embodiments of the present disclosure are described below. In the drawings for explaining the following embodiments, the same reference codes are allocated to elements (members or components) having the same function or shape and redundant descriptions thereof are omitted below.

Three-Dimensional Fabricating Apparatus and Method for Producing Three-Dimensional Object

A three-dimensional fabricating apparatus according to an embodiment of the present disclosure includes: a forward layer fabricator to discharge a fabrication material in a forward path to form a forward fabrication layer; and a backward layer fabricator to discharge a fabrication material in a backward path to form a backward fabrication layer, where a total discharge amount of the fabrication material in the backward path is larger than a total discharge amount of the fabrication material in the forward path, and the apparatus has another fabricator as appropriate.

A method for producing a three-dimensional object according to an embodiment of the present disclosure includes: discharging a fabrication material in a forward path to form a forward fabrication layer; and discharging a fabrication material in a backward path to form a backward fabrication layer, where a total discharge amount of the fabrication material in the backward path is larger than a total discharge amount of the fabrication material in the forward path, and the method includes another step as appropriate.

The method for producing a three-dimensional object can be preferably performed by using the three-dimensional fabricating apparatus.

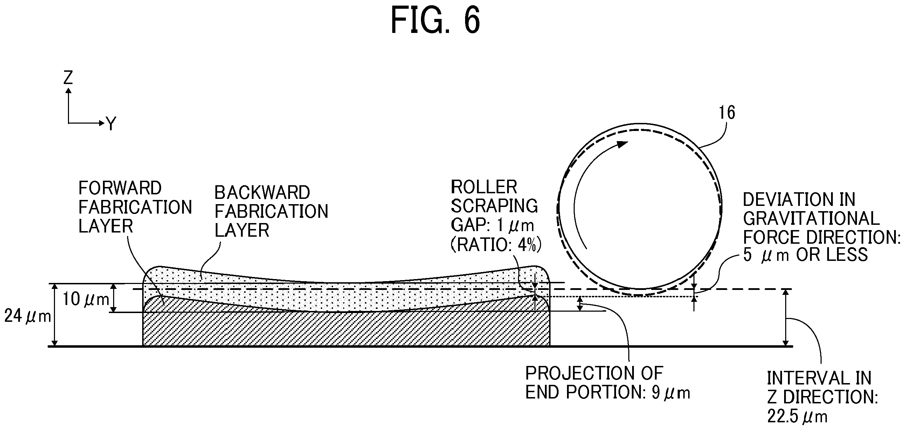

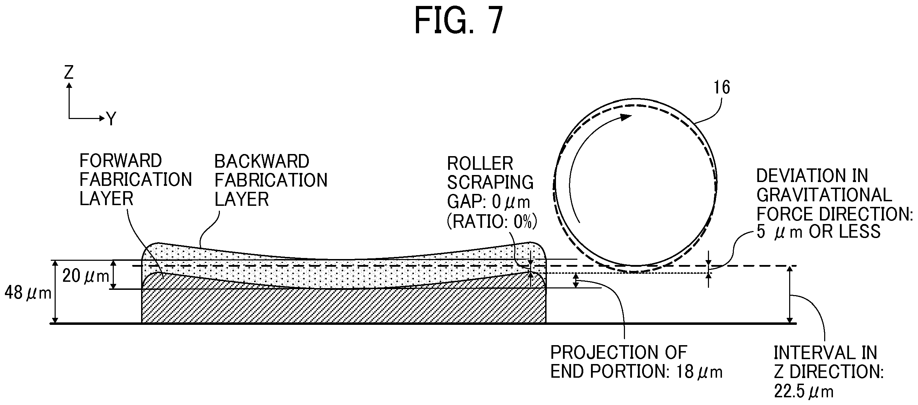

As illustrated in FIGS. 6 and 7, embodiments of the present disclosure are based on the following findings. In the three-dimensional fabricating apparatus in the related art in which the total discharge amount of the fabrication material in the backward path is larger than the total discharge amount of the fabrication material in the forward path, when the thickness of the end portion of the cured forward fabrication layer is increased, the distance between a flattener (e.g., a flattening roller 16) and the cured forward fabrication layer (hereinafter, also referred to as "roller scraping gap") becomes relatively narrower. In the case where the roller is not a perfect circle and has vibrations or fluctuations, the roller would collide with the forward fabrication layer, whereby the surface of the backward fabrication material is corrugated and the roller is damaged. Further, an end portion of a three-dimensional object formed by sequentially stacking layered objects has insufficient sharpness.

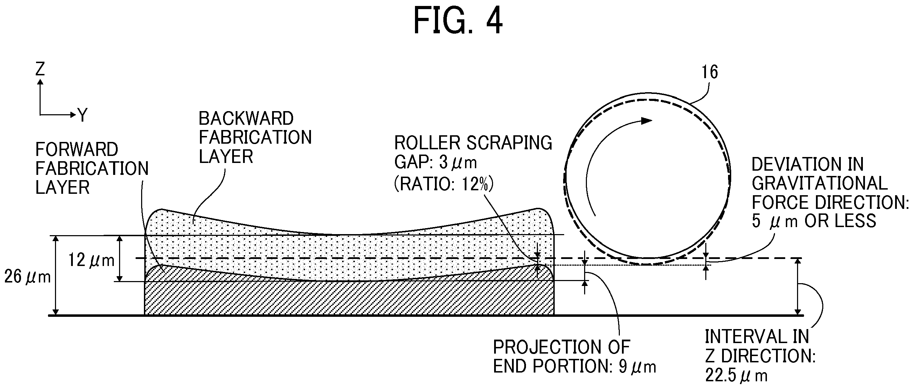

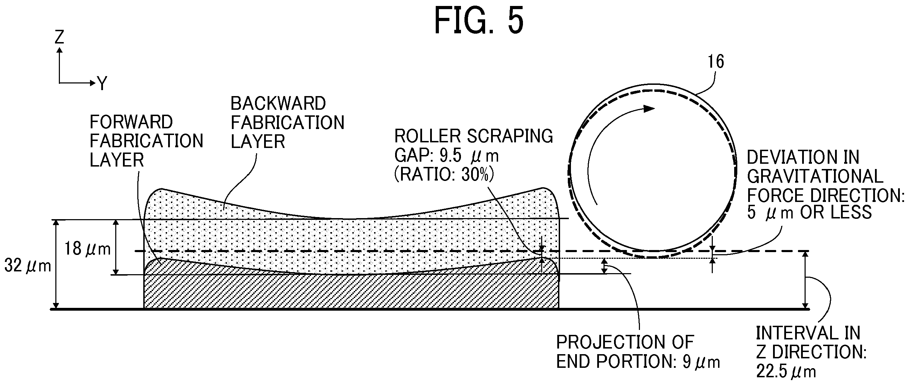

As illustrated in FIGS. 4 and 5, in the three-dimensional fabricating apparatus and the method for producing a three-dimensional object according to embodiments of the present disclosure, the total discharge amount of the fabrication material in the backward path is larger than the total discharge amount of the fabrication material in the forward path, so that it is possible to ensure a thick roller scraping gap. Thus, it is possible to prevent the surface of the backward fabrication material from being corrugated and to prevent the roller to be damaged. Further, the sharpness and the flatness of the end portion of the layered object can be further improved, and a high-definition three-dimensional object can be produced.

Furthermore, when the discharge amount is different between the forward path and the backward path, there is a difference in mixing speed between the uncured first fabrication material (model material) and the second fabrication material (support material) in the forward path and the backward path. Accordingly, roughness is likely to occur on the surface of a model portion after removal of the support portion formed of the second fabrication material (support material). Furthermore, when printing is performed from both directions, the landing position of the fabrication material does not coincide between the forward path and the backward path. The first fabrication material (model material) and the second fabrication material (support material) are mixed at the upper and lower sides and the front and rear sides. Accordingly, cracks or irregularities would occur, and roughness would occur on the surface of the model portion after removal of the support portion. According to an embodiment of the present disclosure, a method is employed in which the second fabrication material (support material) is discharged and cured after the first fabrication material (model material) is discharged and cured in the same fabrication layer. Such a method can provide a three-dimensional object having a smooth surface of a model portion after removal of a support portion.

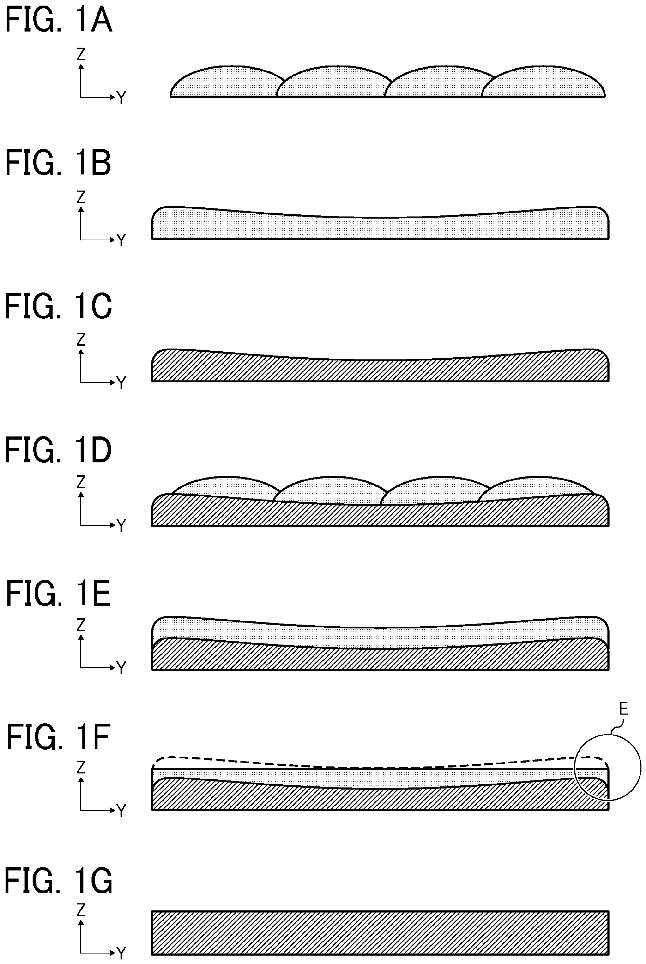

The method for producing a three-dimensional object according to the present embodiment includes the forward layer fabricating and the backward layer fabricating illustrated in FIGS. 1A to 1G.

In the forward layer fabricating, when a liquid fabrication material having a high viscosity is discharged from a discharger, such as a nozzle, in the forward path (see FIG. 1A), the discharged fabrication material has a deflection in the center portion due to surface tension and the end portion becomes a rounded shape (see FIG. 1B). Thereafter, the discharged forward fabrication material is cured with a curing device, such as a UV irradiation unit, to form a forward fabrication layer (see FIG. 1C).

In the backward layer fabricating, a high-viscous liquid fabrication material is discharged from the discharger, such as a nozzle, in an amount larger than the amount of the fabrication material in the forward path so as to overlap with the top of the cured forward fabrication layer in the backward path (see FIGS. 1D and IE), and the flattener contacts the surface of the discharged backward fabrication material to flatten the backward fabrication material (see FIG. IF). Thereafter, the backward fabrication material flattened is cured with the curing device, such as a UV irradiation unit, to form a backward fabrication layer (see FIG. 1G).

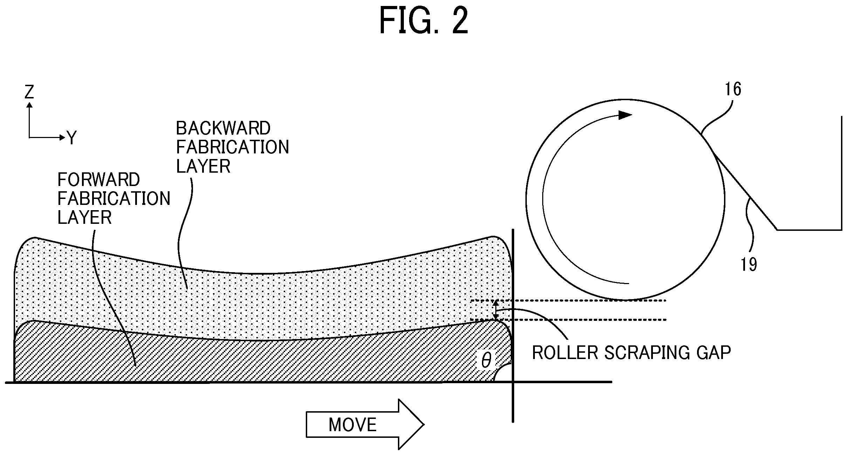

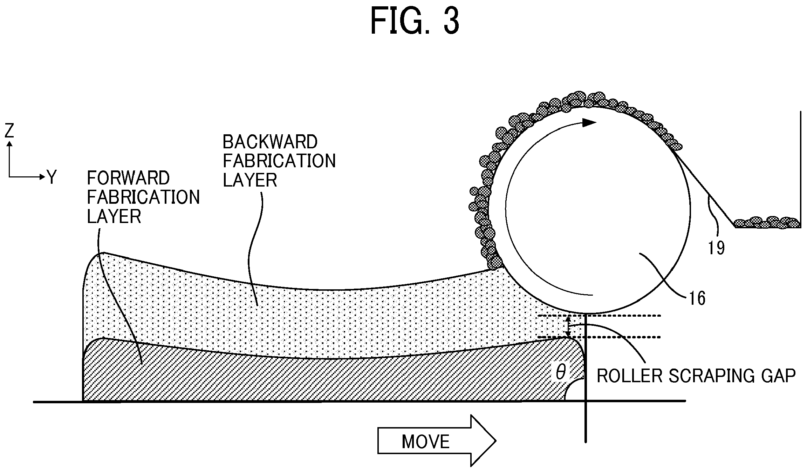

As illustrated in FIGS. 2 and 3, in the stage after FIG. IE, the method for producing a three-dimensional object allows the flattener such as the flattening roller 16 to contact the surface of the backward fabrication material (before curing the backward fabrication material) to scrap off the extra backward fabrication material. As a result, the surface of the backward fabrication material can be flattened (see FIG. IF). Further, as indicated by E in FIG. IF, the end portion of the backward fabrication material can be sharpened.

Further, as illustrated in FIG. 1G, the surface of the backward fabrication material is flattened and cured to form a backward fabrication layer. Therefore, the method for producing a three-dimensional object of the present embodiment can form a layered object having no deflection in the center portion and having a flat surface. The stacking of the layered object is repeated so that a high-definition three-dimensional object having a sharp end portion and excellent flatness can be produced.

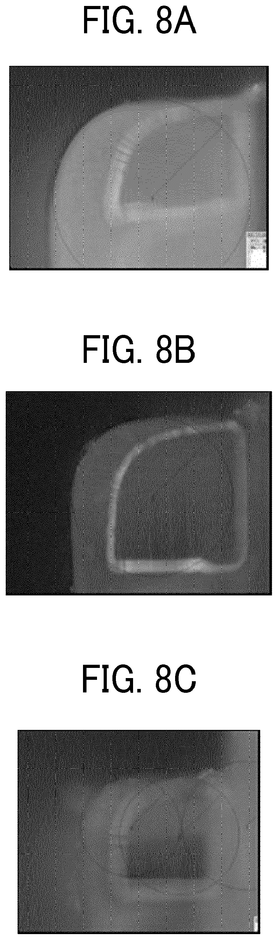

In the present embodiment, the effect of ensuring the roller scraping gap having a thickness thicker than the total discharge amount of the fabrication material in the forward path to improve the sharpness of the end portion will be described with reference to FIGS. 8A to 8C.

FIGS. 8A to 8C are enlarged photographs illustrating end portions of fabricated three-dimensional objects in the case where ratios of the roller scraping gap (i.e., a distance between the roller and the cured forward fabrication layer) to the minimum thickness of the layered object after discharging the backward fabrication material onto the forward fabrication layer (i.e., height to the deflection of the center portion of the backward fabrication material) are 0%, 12% and 30%, respectively.

In the case where the total discharge amount of the fabrication material in the backward path is equal to the total discharge amount of the fabrication material in the forward path and the ratio of the roller scraping gap is 0%, the end portion of the produced three-dimensional object becomes rounded and has insufficient sharpness, as illustrated in FIG. 8A (magnification: 100 times).

Meanwhile, in the case where the total discharge amount of the fabrication material in the backward path is larger than the total discharge amount of the fabrication material in the forward path and the ratio of the roller scraping gap is 12%, the end portion of the three-dimensional object has good sharpness, compared with the case where the ratio of the roller scraping gap is 0% (FIG. 8A), as illustrated in FIG. 8B (magnification: 100 times).

Further, in the case where the total discharge amount of the fabrication material in the backward path is larger than the total discharge amount of the fabrication material in the forward path and the ratio of the roller scraping gap is 30%, the end portion of the three-dimensional object has very good sharpness, compared with the case where the ratio of the roller scraping gap is 12% (FIG. 8B), as illustrated in FIG. 8C (magnification: 100 times).

FIGS. 8A to 8C are photographs enlarged to respective magnifications using a microscope (VHX-500, manufactured by Keyence Corporation).

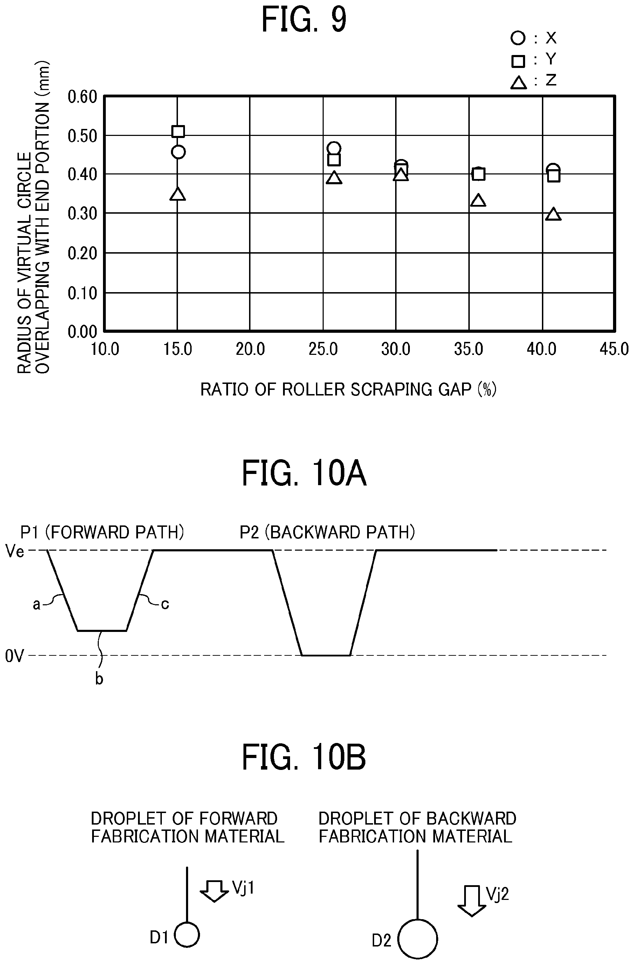

In FIGS. 8A to 8C, a virtual circle was overlapped with the end portion of the three-dimensional object and the radius (mm) of the virtual circle overlapping with the end portion was determined. In the case where the ratio of the roller scraping gap was 10.0% or more and 45.0% or less, the radius (mm) of the virtual circle was determined in the same manner as described above. FIG. 9 illustrates the radius (mm) of the virtual circle overlapping with the end portion of the three-dimensional object with respect to the ratio of the roller scraping gap when the interval in the Z direction is constant (22.5 µm).

In FIG. 9, the smaller the radius (mm) of the virtual circle is, the higher the sharpness is, and the larger the radius (mm) of the virtual circle is, the more rounded the end portion is. Further, in FIG. 9, X, Y, and Z represent the directions of the three-dimensional object.

As is apparent from FIG. 9, the radius (mm) of the virtual circle overlapping with the end portion of the three-dimensional object tends to decrease as the ratio of the roller scraping gap increases. Therefore, as the total discharge amount of the fabrication material in the backward path is larger than the total discharge amount of the fabrication material in the forward path, and the ratio of the roller scraping gap is increased, the sharpness of the end portion of the three-dimensional object to be produced is improved.

### <Experiment>

With a first fabrication material (model material) and a second fabrication material (support material) of the following composition, three-dimensional objects of No. 1 to No. 5 were fabricated using a three-dimensional printer under fabrication conditions illustrated in Table 1. Each of the three-dimensional objects is a cube of 20 mm × 20 mm × 20 mm in which the XZ plane is in contact with the model material and the support material.

### - First fabrication material -

A first fabrication material was prepared by stiring 60% by mass of isobornyl acrylate (manufactured by Tokyo Chemical Industry Co., Ltd.), 23% by mass of tricyclodecane methanol diacrylate (manufactured by DAICEL-ALLNEX LTD.), 10% by mass of UB-6600 (manufactured by Nippon Synthetic Chemical Industry Co., Ltd.), IRUGACURETPO 3% by mass manufactured by BASF SE) and 4% by mass of IRUGACURE 184 (manufactured by BASF SE) in a beaker for 30 minutes.

### - Second fabrication material -

A second fabrication material was prepared by adding, stirring, and mixing 40.0 g of acryloyl morpholine (manufactured by KJ Chemicals Corporation), 10.0 g of 1,5-pentanediol (manufactured by Tokyo Chemical Industry Co., Ltd.), 10.0 g of polypropylene glycol 1 (trade name: Actcol D-1000, Mitsui Chemicals & SKC Polyurethanes Inc., Number average molecular weight: 1,000), and 2.0 g of bis (2,4,6-trimethylbenzoyl) phenylphosphine oxide (trade name: Irgacure 819, manufactured by BASF SE).

Next, regarding the obtained three-dimensional object, the surface roughness Rz of the surface of the model portion after removal of the support portion of the three-dimensional object and the occurrence of cracks were evaluated in the following manner. The results are presented in Table 1.

### - Surface roughness Rz -

The surface roughness Rz was evaluated in the range of 1 mm × 1 mm at the interface between the model material and the support material using VK-X 150 (manufactured by Keyence Corporation).

### - Occurrence of cracks -

The occurrence of cracks was visually observed.

**Table 1-1**

| No. | | 1 | 2 | 3 |
|---|---|---|---|---|
| Fabrication conditions | Printing direction | One directional | Bi-directional | Bi-directional |
| | Simultaneous/separate fabrication of first fabrication material (model material) and second fabrication material (support material) | Simultaneous | Simultaneous | Separate |
| | Layer in which first fabrication material is discharged and cured | n-th layer | n-th layer | n-th layer |
| | Layer in which second fabrication material is discharged and cured | n-th layer | n-th layer | n-th layer |
| Characteristics of Object | Occurrence of cracks | No | Yes | No |
| | Surface roughness Rz (µm) | 250 | 800 | 200 |

**Table 1-2**

| No. | | 4 | 5 |
|---|---|---|---|
| Fabrication conditions | Printing direction | Bi-directional | Bi-directional |
| | Simultaneous/separate fabrication of first fabrication material (model material) and second fabrication material (support material) | Simultaneous | Simultaneous |
| | Layer in which first fabrication material is discharged and cured | n-th layer | n-th layer |
| | Layer in which second fabrication material is discharged and cured | (n+1)th layer | (n+2)th layer |
| Characteristics of Object | Occurrence of cracks | No | No |
| | Surface roughness Rz (µm) | 230 | 200 |

From the results of Table 1, as indicated in No. 2, when the first fabrication material (model material) and the second fabrication material (support material) were simultaneously discharged in a reciprocating manner and cured, cracks occurred and the surface roughness Rz was greater than No. 1 and No. 3.

On the other hand, as indicated in No. 4 and No. 5, when the second fabrication material is discharged and cured after the first fabrication material is discharged and cured, it was found that no cracks did not occur, the surface roughness Rz was small, and a smooth surface of the model portion after removal of the support portion could be obtained.

### < Forward Layer Fabricator and Forward Layer Fabricating>

The forward layer fabricator discharges the fabrication material in the forward path to form a forward fabrication layer. It should be noted that the forward layer fabricator may cure the discharged fabrication material to form the forward fabrication layer.

The forward layer fabricating discharges the fabrication material in the forward path to form the forward fabrication layer. It should be noted that the forward layer fabricating may cure the discharged fabrication material to form the forward fabrication layer.

The fabrication material may be discharged using a fabrication material discharging member.

The fabrication material may be cured using the fabrication material curing member.

### << Fabrication Material Discharging Member >>

The fabrication material discharging member discharges the fabrication material in the forward path.

The fabrication material discharging member is not limited in particular as long as the member discharges the fabrication material in the forward path. The member may be appropriately selected according to the purpose. For example, a known member such as a head may be used.

The head is not limited in particular and may be appropriately selected according to the purpose. Examples of heads include piezoelectric element (piezo element) heads and thermal expansion (thermal) heads. Among the heads, the piezoelectric element (piezo element) heads are preferable.

### « Forward Fabrication Material »

The forward fabrication material for forming a forward fabrication layer is not limited in particular, and may be appropriately selected on the basis of the performance required for constituting the main body fabricating a three-dimensional object.

Examples of fabrication materials include model materials and support materials.

The forward fabrication material is not limited in particular as long as it is a liquid that is cured by applying energy such as light or heat. The forward fabrication material may be appropriately selected according to the purpose, and preferably contains a polymerizable monomer such as a monofunctional monomer or a polyfunctional monomer and an oligomer, and further contains another component as appropriate. Preferably, the forward fabrication material has liquid physical properties (such as viscosity and surface tension) that make a liquid be discharged from a fabrication material discharging head used for a fabrication material jet printer.

### - Polymerizable Monomer -

Examples of polymerizable monomers include monofunctional monomers and polyfunctional monomers. The polymerizable monomers may be used singly, or in combination of two or more kinds of the polymerizable monomers.

### - Monofunctional Monomer -

Examples of monofunctional monomers include acrylamide, N-substituted acrylamide derivatives, N,N-disubstituted acrylamide derivatives, N-substituted methacrylamide derivatives, N, N-disubstituted methacrylamide derivatives, and acrylic acid. The polymerizable monomers may be used singly, or in combination of two or more kinds of the polymerizable monomers. Among the polymerizable monomers, acrylamide, N,N-dimethylacrylamide, N-isopropylacrylamide, acryloylmorpholine, hydroxyethylacrylamide and isobornyl (meth) acrylate are preferable.

A monofunctional monomer is polymerized to form an organic polymer.

The content of the monofunctional monomer is preferably 0.5% by mass or more and 90% by mass or less based on the total amount of the fabrication material.

The monofunctional monomer other than the monofunctional monomers described above is not limited in particular and may be appropriately selected according to the purpose. Examples of monofunctional monomers include 2-ethylhexyl (meth) acrylate, 2-hydroxyethyl (meth) acrylate, 2-hydroxypropyl (meth) acrylate, caprolactone modified tetrahydrofurfuryl (meth)acrylate, 3-methoxybutyl (meth)acrylate, tetrahydrofurfuryl (meth)acrylate, lauryl (meth)acrylate, 2-phenoxyethyl (meth)acrylate, isodecyl (meth)acrylate, isooctyl (meth)acrylate, tridecyl (meth)acrylate, caprolactone (meth)acrylate, and ethoxylated nonylphenol (meth)acrylate.

### - Polyfunctional Monomer -

The polyfunctional monomer is not limited in particular and may be appropriately selected according to the purpose. Examples of polyfunctional monomers include difunctional monomers and trifunctional or higher functional monomers. The polymerizable monomers may be used singly, or in combination of two or more kinds of the polymerizable monomers.

Examples of difunctional monomers include tripropylene glycol di(meth)acrylate, triethylene glycol di(meth)acrylate, tetraethylene glycol di(meth)acrylate, polypropylene glycol di(meth)acrylate, neopentyl glycol hydroxy pivalic acid ester di(meth)acrylate, hydroxy pivalic acid neopentyl glycol ester di(meth)acrylate, 1,3-butanediol di(meth)acrylate, 1,4-butanediol di(meth)acrylate, 1,6-hexanediol di(meth)acrylate, 1,9-nonanediol di(meth)acrylate, diethylene glycol di(meth)acrylate, neopentyl glycol di(meth)acrylate, tripropylene glycol di(meth)acrylate, caprolactone-modified hydroxy pivalic acid neopentyl glycol ester di(meth)acrylate, propoxylated neopentyl glycol di(meth)acrylate, ethoxy-modified bisphenol A di(meth)acrylate, polyethylene glycol 200 di(meth)acrylate, and polyethylene glycol 400 di(meth)acrylate. The polymerizable monomers may be used singly, or in combination of two or more kinds of the polymerizable monomers.

Examples of trifunctional or higher functional monomers include trimethylolpropane tri(meth)acrylate, pentaerythritol tri(meth)acrylate, dipentaerythritol hexa(meth)acrylate, triallyl isocyanurate, ε-caprolactone modified dipentaerythritol tri(meth)acrylate, ε-caprolactone modified dipentaerythritol tetra(meth)acrylate, (meth)acrylate, ε-caprolactone modified dipentaerythritol penta(meth)acrylate, ε-caprolactone modified dipentaerythritol hexa(meth)acrylate, tris(2-hydroxyethyl)isocyanurate tri(meth)acrylate, ethoxylated trimethylolpropane tri(meth)acrylate, propoxylated trimethylolpropane tri(meth)acrylate, propoxylated glyceryl tri(meth)acrylate, pentaerythritol tetra(meth)acrylate, ditrimethylolpropane tetra(meth)acrylate, dipentaerythritol hydroxy penta(meth)acrylate, ethoxylated pentaerythritol tetra(meth)acrylate, and penta(meth)acrylate ester. The polymerizable monomers may be used singly, or in combination of two or more kinds of the polymerizable monomers.

### - Oligomer -

Oligomer which is a low grade polymer of the above monomer or has a reactive unsaturated bond group at the terminal may be used singly, or in combination of two or more kinds of the oligomers.

### - Other Components-

Other components are not limited in particular and may be appropriately selected according to the purpose. Examples of other components include surfactants, polymerization inhibitors, polymerization initiators, colorants, viscosity modifiers, adhesion imparting agents, antioxidants, anti-aging agents, crosslinking accelerators, ultraviolet absorbers, plasticizers, antiseptics, and dispersants.

### - Surfactant -

Examples of surfactants include surfactants having a molecular weight of 200 or more and 5,000 or less, and specifically include PEG nonionic surfactants [a 1 to 40 mol ethylene oxide (hereinafter abbreviated as EO) adduct of nonylphenol, an EO 1 to 40 mol adduct of stearic acid, etc.], polyhydric alcohol type nonionic surfactants (sorbitan palmitic acid monoester, sorbitan stearic acid monoester, sorbitan stearic acid triester, etc.), fluorine-containing surfactants (a perfluoroalkyl EO 1 to 50 mol adduct, perfluoroalkyl carboxylate, perfluoroalkyl betaine, etc.), and modified silicone oils [polyether-modified silicone oil, (meth)acrylate-modified silicone oil, etc.]. The polymerizable monomers may be used singly, or in combination of two or more kinds of the polymerizable monomers.

The content of the surfactant is preferably 3% by mass or less based on the total amount of the fabrication material, and is more preferably 0.1% by mass or more and 5% by mass or less from the viewpoint of the surfactant-containing effect and the physical properties of the photocured product.

### - Polymerization Inhibitor -

Examples of polymerization inhibitors include phenol compounds [hydroquinone, hydroquinone monomethyl ether, 2,6-di-t-butyl-p-cresol, 2,2-methylene-bis-(4-methyl-6-t-butylphenol), 1,1,3-tris-(2-methyl-4-hydroxy-5-t-butylphenyl)butane, etc.], sulfur compounds [dilauryl thiodipropionate, etc.], phosphorus compounds [triphenyl phosphite, etc.], and amine compounds [phenothiazine etc.]. The polymerizable monomers may be used singly, or in combination of two or more kinds of the polymerizable monomers.

The content of the polymerization inhibitor is preferably 5% by mass or less based on the total amount of the fabrication material, and is more preferably 0.1% by mass or more and 5% by mass or less from the viewpoint of the stability of the monomer and the polymerization rate.

### - Polymerization Initiator -

Examples of polymerization initiators include thermal polymerization initiators and photopolymerization initiators. Among the polymerization initiators, the photopolymerization initiators are preferable from the viewpoint of storage stability.

As the photopolymerization initiators, any substance that generates radicals by irradiation with light (in particular, ultraviolet light having a wavelength of 220 nm to 400 nm) can be used.

Examples of photopolymerization initiators include acetophenone, 2,2-diethoxyacetophenone, p-dimethylaminoacetophenone, benzophenone, 2-chlorobenzophenone, p,p'-dichlorobenzophenone, p,p-bisdiethylaminobenzophenone, Michler's ketone, benzyl, benzoin, benzoin methyl ether, benzoin ethyl ether, benzoin isopropyl ether, benzoin-n-propyl ether, benzoin isobutyl ether, benzoin-n-butyl ether, benzyl methyl ketal, thioxanthone, 2-chlorothioxanthone, 2-hydroxy-2-methyl-1-phenyl-1-one, 1-(4-isopropylphenyl)2-hydroxy-2-methylpropane-1-one, methyl benzoyl formate, 1-hydroxycyclohexyl phenyl ketone, azobisisobutyronitrile, benzoyl peroxide, and di-tert-butyl peroxide. The polymerizable monomers may be used singly, or in combination of two or more kinds of the polymerizable monomers.

The thermal polymerization initiator is not limited in particular and may be appropriately selected according to the purpose. Examples of thermal polymerization initiators include azo initiators, peroxide initiators, persulfate initiators, redox (oxidation-reduction) initiators.

Examples of azo initiators include VA-044, VA-46B, V-50, VA-057, VA-061, VA-067, VA-086, 2,2'-azobis(4-methoxy-2,4'-dimethylvaleronitrile) (VAZO 33), 2,2'-azobis(2-amidinopropane)dihydrochloride (VAZO 50), 2,2'-azobis(2,4-dimethylvaleronitrile) (VAZO 52), 2,2'-azobis(isobutyronitrile) (VAZO 64), 2,2'-azobis-2-methylbutyronitrile (VAZO 67), 1,1-azobis(1-cyclohexanecarbonitrile) (VAZO 88) (all manufactured by DuPont), 2,2'-azobis(2-cyclopropylpropionitrile), and 2,2'-azobis(methylisobutyrate) (V-601) (all manufactured by FUJIFILM Wako Pure Chemical Corporation).

Examples of peroxide initiators include benzoyl peroxide, acetyl peroxide, lauroyl peroxide, decanoyl peroxide, dicetyl peroxydicarbonate, di(4-t-butylcyclohexyl)peroxydicarbonate (trade name: Perkadox 16S, manufactured by Akzo Nobel N. V), di(2-ethylhexyl)peroxydicarbonate, t-butyl peroxypivalate (trade name: Lupersol 11, manufactured by Elf Atochem), t-butylperoxy-2-ethylhexanoate (trade name: Trigonox 21-C50, manufactured by Akzo Nobel N. V.), and dicumyl peroxide.

Examples of persulfate initiators include potassium persulfate, sodium persulfate, and ammonium persulfate.

Examples of redox (oxidation-reduction) initiators include combinations of persulfate initiators with reductants such as sodium metabisulfite and sodium hydrogen sulfite, systems based on organic peroxides and tertiary amines (e.g., a system based on benzoyl peroxide and dimethylaniline), and systems based on organic hydroperoxides and transition metals (e.g., a system based on cumene hydroperoxide and cobalt naphthenate).

The content of the polymerization initiator is preferably 10% by mass or less and more preferably 5% by mass or less, based on the total amount of the fabrication material.

### - Colorant -

Dyes and pigments which are dissolved or stably dispersed in the fabrication material and are excellent in thermal stability are suitable as colorants. Among the dyes and pigments, soluble dyes (solvent dyes) are preferable. In order to adjust the color, it is possible to mix two or more kinds of the colorants at appropriate times.

### << Fabrication Material Curing Member >>

The fabrication material curing member cures the discharged forward fabrication material to form the forward fabrication layer.

The fabrication material curing member is not limited in particular as long as it cures the discharged forward fabrication material to form the forward fabrication layer. The fabrication material curing member may be appropriately selected according to the purpose, and examples of members include ultraviolet irradiation devices.

### - Ultraviolet Irradiation Device -

Examples of ultraviolet (UV) irradiation devices include high-pressure mercury lamps, ultra-high pressure mercury lamps, and metal halides.

A high pressure mercury lamp is a point light source, and the Deep UV lamp with high light use efficiency combined with an optical system can irradiate light in a short wavelength region.

Metal halides are effective for coloring materials because of their wide wavelength region. Halides of metals such as Pb, Sn, and Fe are used, and may be selected according to the absorption spectrum of the polymerization initiator. The lamp used for curing is not limited in particular and may be appropriately selected according to the purpose. For example, commercially available lamps such as H lamp, D lamp, and V lamp, manufactured by Fusion Systems, may also be used.

The three-dimensional fabricating apparatus may be a heater-less apparatus, and may be an apparatus capable of performing fabrication at normal temperature.

### <Backward Layer Fabricator and Backward Layer Fabricating>

The backward layer fabricator discharges the fabrication material to form a fabrication layer. It should be noted that the backward layer fabricator allows the flattener to contact the surface of the discharged backward fabrication material to flatten the backward fabrication material, and may cure the backward fabrication material to from a backward fabrication layer.

The backward layer fabricating discharges the fabrication material to form a fabrication layer. It should be noted that the backward layer fabricating allows the flattener to contact the surface of the discharged backward fabrication material to flatten the backward fabrication material, and may cure the backward fabrication material to from a backward fabrication layer.

The fabrication material may be discharged using a fabrication material discharging member.

The fabrication material may be cured using the fabrication material curing member.

### << Fabrication Material Discharging Member >>

The fabrication material discharging member discharges the fabrication material in the backward path.

The fabrication material discharging member is not limited in particular as long as the member discharges the fabrication material in the backward path. The member may be appropriately selected according to the purpose. For example, the same member as the fabrication material discharging member in backward path may be used.

The member used as the fabrication material discharging member in the backward path may be the same as or different from the fabrication material discharging member in the forward path.

For example, the fabrication material discharging member in the forward path is movable bi-directionally, so that as the fabrication material discharging member in the backward path, the same fabrication material discharging member as the fabrication material discharging member in the forward path may be used. Further, for example, the position of the fabrication material discharging member is secured so that the stage on which the three-dimensional object is mounted is movable bi-directionally. Thus, it is possible to make the fabrication material discharging member in the backward path equal to the fabrication material discharging member in the forward path.

The backward fabrication material is preferably discharged so as to overlap with the top of the forward fabrication layer cured in the backward path. However, a region in which the backward fabrication material does not overlap with the top of the forward fabrication layer may be included, and a shift may occur in the overlap between the backward fabrication material and the forward fabrication layer.

For example, the cured forward fabrication layer is formed in FIG. 1C, the layer is shifted by about 80 µm in the Y direction (sub-scanning direction) from the position of the forward fabrication material, and the backward fabrication material is overlapped with the layer in FIG. 1D.

The total discharge amount of the fabrication material in the backward path is larger than the total discharge amount of the fabrication material in the forward path.

The total discharge amount of the fabrication material in the backward path is preferably 1.2 times or more and 3 times or less the total discharge amount of the fabrication material in the forward path.

Examples of a method for adjusting a total discharge amount of the fabrication material in the backward path to be larger than the total discharge amount of the fabrication material in the forward path include, for example, a method for making a droplet of a backward fabrication material larger than a droplet of a forward fabrication material.

Examples of the method for making a droplet of a backward fabrication material larger than a droplet of a forward fabrication material include a method including: setting a pulse voltage of a droplet of a backward fabrication material to equal to or more than a pulse voltage of a droplet of a forward fabrication material to enlarge the droplet of the backward fabrication material and a method including: setting a pulse number of a droplet of a backward fabrication material before impact to equal to or more than a pulse number of a droplet of a forward fabrication material before impact, and uniting a plurality of droplets of the backward fabrication material during flying to enlarge the droplet of the backward fabrication material.

Referring to FIGS. 10 and 10B, the method including: setting a pulse voltage of a droplet of a backward fabrication material to equal to or more than a pulse voltage of a droplet of a forward fabrication material to enlarge the droplet of the backward fabrication material will be described.

Here, an example of a liquid discharging head using a piezoelectric element as a pressure generator will be described.

A forward driving pulse P1 is applied to the piezoelectric element of the head 11 (see FIG. 10A), and then a droplet D1 of the forward fabrication material is discharged from a nozzle (see FIG. 10B). Thereafter, a backward driving pulse P2 is applied to the piezoelectric element of the head 11 (see FIG. 10A), and then a droplet D2 of the backward fabrication material is discharged from a nozzle (see FIG. 10B).

Further, as illustrated in FIG. 10A, the forward driving pulse P1 includes a waveform element a that falls from an intermediate potential Ve to a predetermined falling potential, a waveform element b that holds the falling potential, and a waveform element c that rises from the falling potential to the intermediate potential Ve. The waveform elements a to c are applied, and then the droplet is discharged from the nozzle.

The backward driving pulse P2 is the same as the forward driving pulse P1.

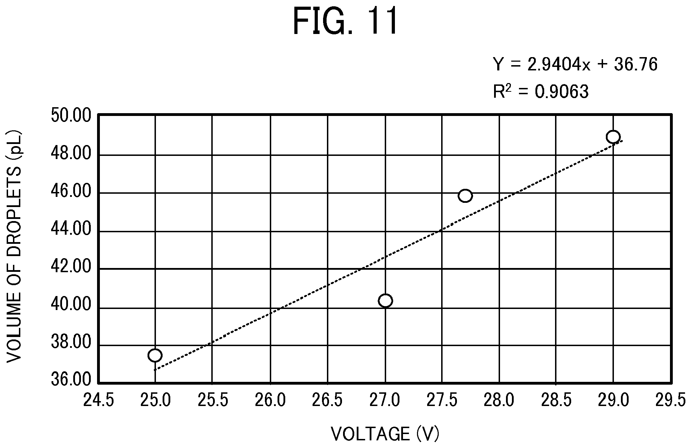

Here, as illustrated in FIG. 11, the volume (unit: pL) of droplets of the fabrication material tends to increase as the pulse voltage increases.

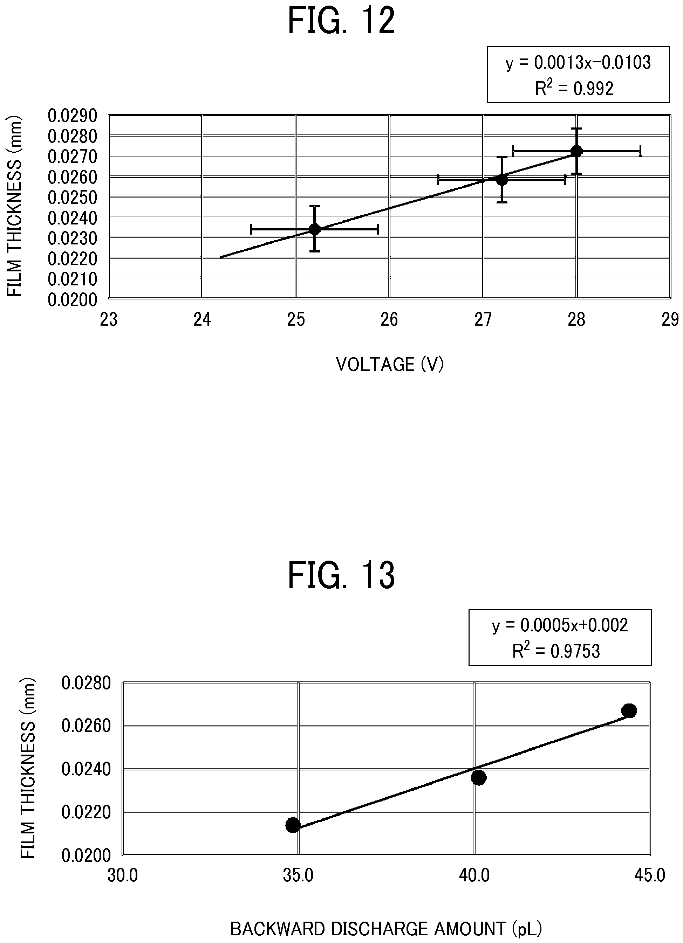

In addition, FIG. 12 illustrates the relationship between pulse voltage and film thickness when the film thickness is plotted on the vertical axis in FIG. 11. The film thickness is likely to increase as the pulse voltage is higher. The waveform corresponds to the backward path.

FIG. 13 illustrates the relationship between the discharge amount on the backward path and the film thickness. The film thickness is proportional to the discharge amount on the backward path. From the results of FIG. 13, the discharge amount targeted for the forward path is 25 pL and the film thickness is about 14 µm.

Therefore, as illustrated in FIG. 10A, the falling potential of the backward driving pulse P2 is set to be higher than the falling potential of the forward driving pulse P1 (in other words, the pulse voltage of the droplet of the backward fabrication material is set to be equal to or larger than the pulse voltage of the droplet of the forward fabrication material), so that the droplet D2 by the backward driving pulse P2 has a larger volume than the droplet D1 by the forward driving pulse P1 (see FIG. 10B).

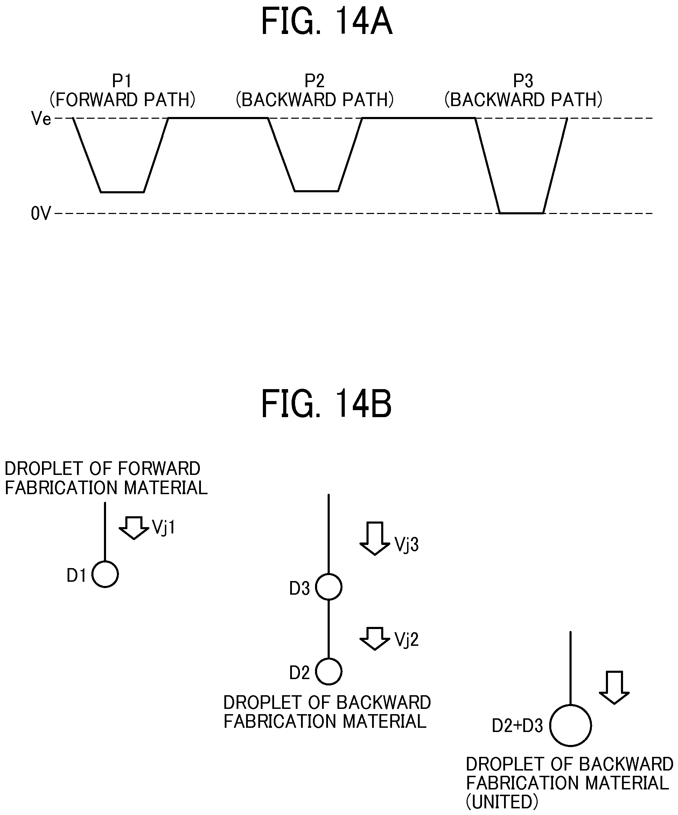

Referring to FIGS. 14A and 14B, the method including: setting a pulse number of a droplet of a backward fabrication material before impact to equal to or more than a pulse number of a droplet of a forward fabrication material before impact, and uniting a plurality of droplets of the backward fabrication material during flying to enlarge the droplet of the backward fabrication material will be described.

Here, an example of a liquid discharging head using a piezoelectric element as a pressure generator will be described.

FIGS. 14A and 14B are diagrams illustrating when one droplet is formed from the forward fabrication material, and two droplets from the backward fabrication material are united.

The forward driving pulse P1 is applied to the piezoelectric element of the head 11 (see FIG. 14A), and then the droplet D1 of the forward fabrication material is discharged from the nozzle (see FIG. 14B). Thereafter, the backward driving pulse P2 is applied to the piezoelectric element of the head 11 (see FIG. 14A), and then the droplet D2 and a droplet D3 of the backward fabrication material are successively discharged from the nozzle (see FIG. 14B).

Here, as illustrated in FIG. 14A, in the case where the falling potential of a backward driving pulse P3 is set to be larger than the falling potential of the backward driving pulse P2 (in other words, in the case where the pulse voltage of the droplet D3 of the backward fabrication material is set to be larger than the pulse voltage of the droplet D2 of the backward fabrication material, whereby the startup time constant is the same), a velocity Vj3 of the droplet D3 by the backward driving pulse P3 is higher than a velocity Vj2 of the droplet D2 by the backward driving pulse P2 (see FIG. 10B).

Thus, the droplet D3 catches up with the droplet D2 during flying and unites with the droplet D2 to form one droplet having a volume larger than the droplet D1 of the forward fabrication material (a droplet of the backward fabrication material D2 + D3) (see FIG. 14B).

In the present embodiment, it is preferable that the nozzle for discharging the fabrication material in the forward path and the nozzle for discharging the fabrication material in the backward path are the same (using a single common nozzle) in order to accurately set the landing positions of the fabrication material in the forward path and the backward path. The landing positions of ink droplets need be accurately controlled from the viewpoint of high-precision fabrication and fabrication with accurate dimensions. However, even if the positional accuracy of the X-Y coordinates is accurately controlled, a variation would arise in the nozzle position within a geometric tolerance range and cannot be canceled even if the position accuracy of the X-Y coordinates is corrected. However, if the same nozzle is used, the geometric tolerance substantially disappears since the nozzle positions are the same. Thus, the configuration preferable for accurate landing position can be obtained.

Here, a description is given of the order of discharging and curing the first fabrication material (for example, model material) and the second fabrication material (for example, support material) when stacking three-dimensional objects. In the present embodiment, the discharge amount differs between the forward path and the backward path. Accordingly, when the first fabrication material and the second fabrication material are alternately arranged, that is, the first fabrication material is discharged in the forward path and the second fabrication material is discharged in the backward path, the heights of the two cured products would not coincide with each other and a desired three-dimensional object would not be obtained. Therefore, the first fabrication material is discharged in the first forward path and the first backward path and the second fabrication material in the second forward path and the second backward path, thus allowing formation of fabrication layers having the same height.

In a method of curing the second fabrication material after curing the first fabrication material, a fabrication layer in which the first fabrication material is cured may be different from a fabrication layer in which the second fabrication material is cured. That is, in the n-th layer, after discharging and curing the first fabrication material while reciprocating m times, the first fabrication material of the (n + m) th layer is discharged and cured. At the same time, the second fabrication material is discharged and cured in the n-th layer. Thus, a three-dimensional object having a smooth surface of a model portion after removal of the support portion can be obtained. Here, n represents a natural number and m represents a positive or negative integer. The integer m is preferably 2. When m = 1, the surface roughness Rz is high, and in the case of m ≥ 3, there is no change in the surface roughness Rz, which is undesirable from the viewpoint of decrease in productivity.

### « Backward Fabrication Material »

The backward fabrication material is not limited in particular and may be appropriately selected according to the purpose. For example, the same fabrication material as the forward fabrication material may be used.

The viscosity of the backward fabrication material is not limited in particular and may be appropriately selected according to the purpose. However, in order to maintain the discharged shape during the period when the material is discharged, flattened by the flattener such as the flattening roller 16, and cured, the viscosity is preferably 100 mPa·s or less at 25°C, more preferably 3 mPa·s or more and 20 mPa·s or less at 25°C, and preferably 6 mPa·s or more and 12 mPa·s or less in particular.

It should be noted that the viscosity can be measured, for example, in a 25°C environment using a rotational viscometer (VISCOMATE VM-150 III, manufactured by Toki Sangyo Co., Ltd.).

The surface tension of the backward fabrication material is not limited in particular and may be appropriately selected according to the purpose. The surface tension is preferably 20 mN/m or more and 45 mN/m or less, and more preferably 25 mN/m or more and 34 mN/m or less from the viewpoint of flattening the surface of the fabrication material.

The surface tension may be measured using, for example, a surface tension meter (automatic contact angle meter DM-701, manufactured by Kyowa Interface Science Co., LTD.).

### << Flattener >>

The flattener contacts the surface of the discharged backward fabrication material to flatten the backward fabrication material.

The flattener is not limited in particular as long as the flattener contacts the surface of the discharged backward fabrication material. The flattener may be appropriately selected according to the purpose, and examples of flatteners include rollers and blades.

In the three-dimensional fabricating apparatus, the total discharge amount of the fabrication material in the backward path is larger than the total discharge amount of the fabrication material in the forward path. Therefore, the thickness of the backward fabrication material is formed thicker than the thickness of the forward fabrication layer.

As illustrated in FIG. 2, in the three-dimensional fabricating apparatus, from a lateral direction, the flattening roller 16 as the flattener contacts the end portion of the backward fabrication material having a thickness thicker than the thickness of the forward fabrication layer. As a result, it is possible to scrape the extra backward fabrication material including the rounded end portion, flatten the surface of the surface of the backward fabrication material, and sharpen the end portion of the backward fabrication material.

The angle (θ in FIG. 2) between the wall surface of the end portion of the backward fabrication material and the support supporting the three-dimensional object is preferably 80 degrees or more and 100 degrees or less, and more preferably close to 90 degrees (vertical). In the case where the angle is 80 degrees or more and 100 degrees or less, when the flattening roller 16 contacts the backward fabrication material from the lateral direction, the end portion of the extra backward fabrication material is scraped off, and the surface of the backward fabrication material can be flattened.

In the three-dimensional fabricating apparatus according to the present embodiment, the thickness of the backward fabrication material is formed thicker than the thickness of the forward fabrication layer so that it is possible to ensure a large amount of the roller scraping gap (distance between the roller and the cured forward fabrication layer).

The ratio of the roller scraping gap to the minimum thickness of the layered object after discharging the backward fabrication material onto the forward fabrication layer (i.e., height to the deflection of the center portion of the backward fabrication material) is preferably 10% or more. When the ratio of the roller scraping gap to the minimum thickness of the layered object is 10% or more, it is possible to prevent a collision between the roller and the cured forward fabrication layer, and further it is possible to prevent the surface of the backward fabrication material from being corrugated or to prevent the roller from being damaged.

The thickness of the roller scraping gap is preferably 3 µm or more, and more preferably 5 µm or more.

As illustrated in FIG. 3, the backward fabrication material scraped off is conveyed on the roller and collected by a collecting member 19 as the roller rotates.

The collecting member 19 is not limited in particular and may be appropriately selected according to the purpose. Examples of the collecting member 19 include blades.

The shape of the flattening roller as the flattener is not limited in particular as long as it can scrape off the backward fabrication material. The shape can be appropriately selected according to the purpose. Examples of the shape include a circular shape and a perfect circle.

The flattening roller 16 may have vibrations and fluctuations. As illustrated in FIGS. 4 to 7, a deviation may occur in the gravitational force direction.

The deviation in the gravitational force direction of the flattening roller 16 between the forward path and the backward path is preferably 10 µm or less, and more preferably 5 µm or less.

### << Fabrication Material Curing Member >>

The fabrication material curing member cures the flattened backward fabrication material to form a backward fabrication layer.

The fabrication material curing member is not limited in particular as long as it cures the flattened backward fabrication material to form a backward fabrication layer. The fabrication material curing member may be appropriately selected according to the purpose. For example, the same material as the fabrication material curing member in the forward path may be used.

The member used as the fabrication material curing member in the backward path may be the same as or different from the fabrication material curing member in the forward path.

In the method for producing a three-dimensional object, the forward layer fabricating and the backward layer fabricating are repeated a plurality of times so that a three-dimensional object can be produced.

Preferably, the flattener contacts each layered object. Thus, the end portion of each layered object is sharpened so that the flatness can be improved.

The layered object is preferably formed by two paths of the forward path and the backward path.

The stacking of the layered object is repeated so that a high-definition three-dimensional object having a sharp end portion and excellent flatness can be produced.

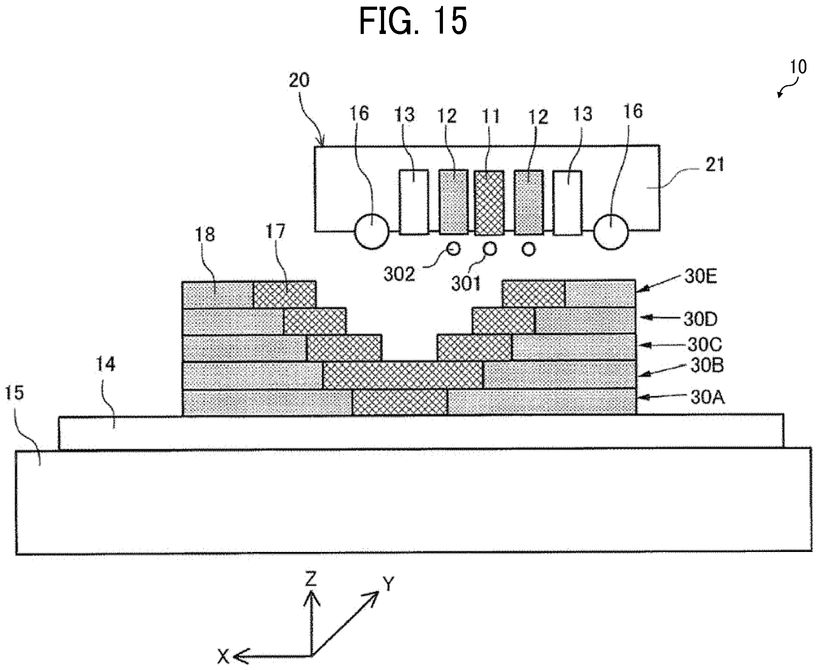

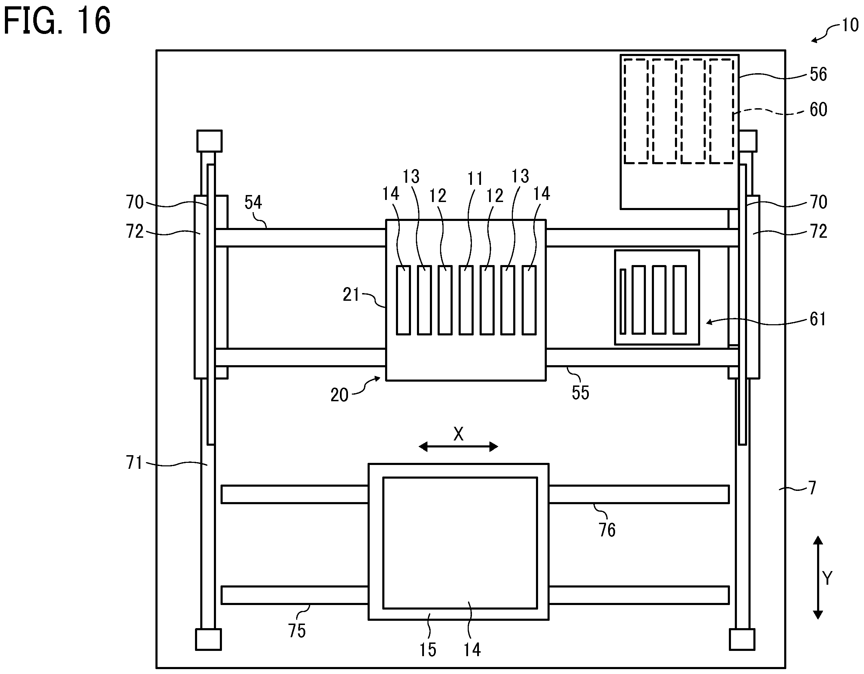

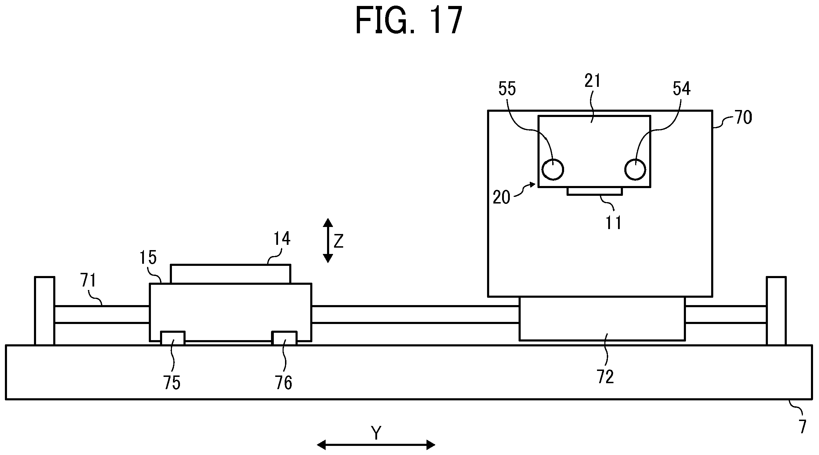

Hereinafter, an outline of an example of the three-dimensional fabricating apparatus according to the present embodiment will be described. FIG. 15 is a front view illustrating the main portion of the three-dimensional fabricating apparatus, FIG. 16 is a plan view of the three-dimensional fabricating apparatus, and FIG. 17 is a side view of the three-dimensional fabricating apparatus.

A three-dimensional fabricating apparatus (hereinafter, also referred to as "3D fabricating apparatus") 10 is a material injection fabricating apparatus, and includes a stage 14 as a fabrication stage in which fabrication layers 30 as layered objects are stacked to form a three-dimensional object, and a fabrication unit 20 that sequentially stacks the fabrication layers 30 on the stage 14 to form an object.

The fabrication unit 20 includes a first head 11 as a discharger to discharge a fabrication material, a UV irradiation unit 13 that emits ultraviolet light as active energy ray, and a flattening roller 16 as flattening member to flatten the fabrication layers 30, in a unit holder 21. It should be noted that the fabrication unit 20 may include a second head 12 to discharge a fabrication material as a model material for fabricating a three-dimensional object as well as a support material for supporting fabrication of a three-dimensional object.

Here, in the X direction, two second heads 12 are arranged across the first head 11, the UV irradiation unit 13 is arranged outside the two second heads 12, and further, the flattening rollers 16 as the flattener are arranged outside the UV irradiation unit 13.

The fabrication material is supplied to the first head 11 through a supply tube by a cartridge 60 which is replaceably mounted in a cartridge mounting portion 56. In the case of using color fabrication materials such as black, cyan, magenta, and yellow materials, a plurality of nozzle rows for discharging droplets of each color may be arranged on the first head 11.

The UV irradiation unit 13 cures the fabrication material discharged from the first head 11. In the case where the UV irradiation unit 13 includes a support material, the UV irradiation unit 13 cures the fabrication layer 30 made of the support material discharged from the second head 12.

In the case where an ultraviolet irradiation lamp is used, it is preferable to include a mechanism for removing ozone generated by ultraviolet irradiation.

Examples of ultraviolet irradiation lamps include high-pressure mercury lamps, ultra-high pressure mercury lamps, and metal halides. An ultra-high pressure mercury lamp is a point light source, and the ultraviolet irradiation lamp with high light use efficiency combined with an optical system can irradiate light in a short wavelength region. Since the metal halides have a wide wavelength region, the metal halides are effective for curing the coloring material. A halide of a metal such as Pb, Sn or Fe is used and may be selected according to the absorption spectrum of the photopolymerization initiator.

The flattening roller 16 rotates and relatively moves with respect to the stage 14 to flatten the surface of the fabrication layer 30 cured on the stage 14.

It should be noted that the term "on the stage 14" means to include the stage 14 and the top of the fabrication layer 30 to be stacked on the stage 14, unless otherwise specified.

The unit holder 21 of the fabrication unit 20 is movably held by guide members 54 and 55 arranged in the X direction.

Further, a maintenance mechanism 61 to maintain and recover the first head 11 is arranged at one side in the X direction of the fabrication unit 20.

Further, the guide members 54 and 55 holding the unit holder 21 of the fabrication unit 20 are held by side plates 70 and 70 on both sides. The side plates 70 and 70 have a slider 72 movably held by a guide member 71 arranged on a base member 7. Thus, the fabrication unit 20 can reciprocate in the Y direction perpendicular to the X direction.

A moving-up/down member 15 moves up and down the stage 14 in the Z direction. The moving-up/down member 15 is movably arranged on guide members 75 and 76 arranged on the base member 7 in the X direction.

Next, referring to FIG. 15, the outline of fabricating operation by the 3D fabricating apparatus 10 will be described.

First, the fabrication unit 20 is moved in the Y direction and positioned on the stage 14. Next, while moving the stage 14 with respect to the stopping fabrication unit 20, a fabrication material 301 is discharged from the first head 11 to a fabrication region (a region where a three-dimensional object is configured). In the case of using the support material, a support material 302 is discharged from the second head 12 to a support region (a region to be removed after fabrication) other than the fabrication region.

Next, the UV irradiation unit 13 emits ultraviolet light onto the fabrication material 301 and the support material 302 to cure the materials, to form a single layer of the fabrication layer 30 including a fabrication object 17 made of the fabrication material and a fabrication object 18 made of the support material.

The fabrication layer 30 is repeatedly fabricated and sequentially stacked. While supporting a model material 301 with the support material 302, a target three-dimensional object made of the model material 301 is fabricated. For example, in the example of FIG. 15, five layers of fabrication layers 30A to 30E are stacked.

Here, every time the plurality of fabrication layers 30 (not necessarily being fixed values) is stacked, for example, every time ten layers are stacked, the flattening roller 16 is pressed against the outermost surface of the fabrication layers 30 to flatten the surface. Thus, the thickness accuracy and the flatness of the fabrication layers 30 are ensured.

In the case of using a roller-shaped member such as the flattening roller 16 as the flattening member, the flattening roller 16 is rotated reversely in the X direction so that the flattening effect can be improved.

Further, in order to keep the gap between the fabrication unit 20 and the fabrication layer 30 on the outermost surface constant, the moving-up/down member 15 moves down the stage 14 every time a single layer of the fabrication layer 30 is formed. It should be noted that the fabrication unit 20 may move up and down.

The 3D fabricating apparatus may include the collecting member 19 to collect the model material 301 or the support material 302, a recycling mechanism, and the like. Further, the apparatus may include a discharge state detector to detect discharge failure nozzles of the first head 11 and the second head 12. Further, the environmental temperature in the apparatus during fabricating may be controlled.

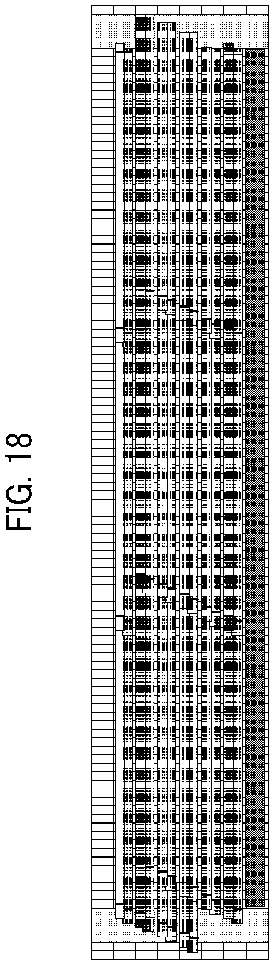

FIG. 18 is a schematic view of fabrication layers formed by discharging a fabrication material while changing the nozzle position in reciprocal movement. The Y coordinate is moved by 1 mm on the backward path so that the head is interlaced from the position of the forward path. Then, on the backward path, the head discharges the fabrication material using nozzles that overlap with the forward path. The fabrication material may be discharged at the same coordinate without moving the head in the Y direction on the backward path. Then, the head moves to the next block to discharge the fabrication material. Further, the head starts discharging of the next layer from a position at which the Y coordinate is shifted from the current layer by 1 mm. After the head performs the movement of shifting the Y coordinate by 1 mm for each layer four times, the head returns to the same Y coordinate as the Y coordinate of the fifth last layer. That is, the start position is repeated for every five layers. The reason for moving the head by 1 mm between the forward path and the backward path and moving the head by 1 mm per layer is to improve the margin for non-discharge of the nozzle.

### Three-Dimensional Fabricating Program

The three-dimensional fabricating program according to an embodiment of the present disclosure causes a computer to execute processing including: discharging a fabrication material in a forward path to form a forward fabrication layer; discharging a fabrication material in a backward path to form a backward fabrication layer; and adjusting a total discharge amount of the fabrication material in the backward path to be larger than a total discharge amount of the fabrication material in the forward path.

Examples of the processing for adjusting a total discharge amount of the fabrication material in the backward path to be larger than a total discharge amount of the fabrication material in the forward path include (1) a method including: setting a pulse voltage of a droplet of a backward fabrication material to be equal or more than a pulse voltage of a forward fabrication material; and enlarging a droplet of a backward fabrication material to increase a total discharge amount of the backward fabrication material, and (2) a method including: setting a pulse number of a droplet of a backward fabrication material before impact to equal to or more than a pulse number of a droplet of a forward fabrication material before impact, and uniting a plurality of droplets of the backward fabrication material during flying to increase the total discharge amount of the backward fabrication material.

The processing by the three-dimensional fabricating program of the present embodiment can be executed by using a computer having a controller constituting a three-dimensional fabricating apparatus.

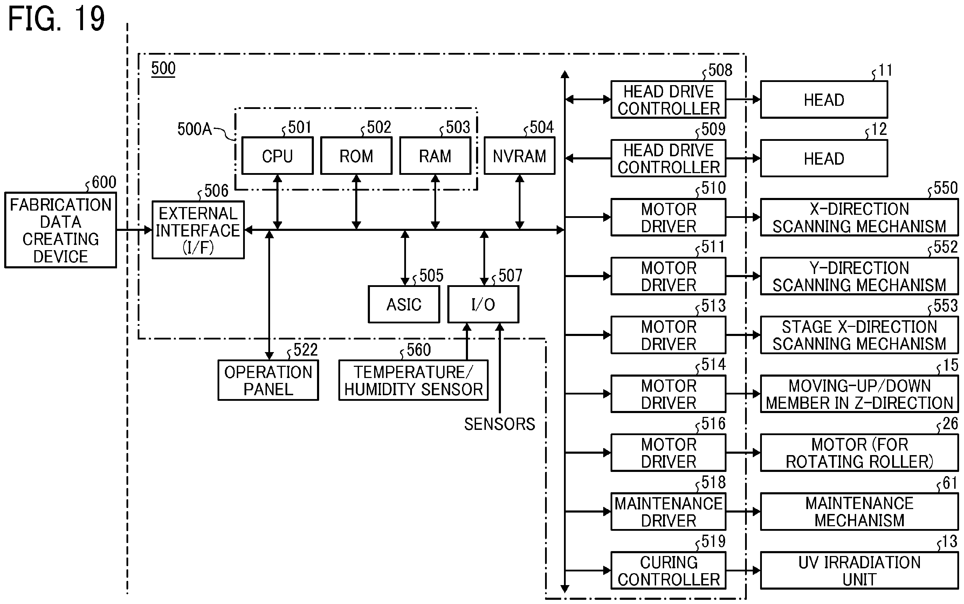

Referring to FIG. 19, the outline of the controller will be described. FIG. 19 is a block diagram illustrating the controller.

A controller 500 includes a main controller 500A including: a central processing unit (CPU) 501 that controls the entire apparatus; a read-only memory (ROM) 502 that stores a three-dimensional fabricating program for causing the CPU 501 to execute control of three-dimensional fabricating operation which includes control according to the present embodiment and another fixed data; and a random access memory (RAM) 503 that temporarily stores fabrication data and the like.

Further, the controller 500 includes a non-volatile random access memory (NVRAM) 504 that holds data while the power source of the apparatus is blocked off. The controller 500 also includes an application specific integrated circuit (ASIC) 505 that performs image processing, such as various types of signal processing for image data, or processes other input and output signals to control the entire apparatus.

Further, the controller 500 includes an external interface (I/F) 506 that sends and receives data and signals to be used for receiving fabrication data from a fabrication data creating device 600 outside.

The fabrication data creating device 600 creates fabrication data (cross-sectional data), which is sliced data obtained by slicing a final fabricated object (three-dimensional object) into respective fabrication layers, and includes an information processing device such as a personal computer.

The controller 500 includes an input-output (I/O) 507 to take in the detected signals of various sensors.

Further, the controller 500 includes a head drive controller 508 that drives and controls the first head 11 of the fabrication unit 20 and a head drive controller 509 that drives and controls the second head 12.

Further, the controller 500 includes a motor driver 510 that drives a motor constituting a unit X-direction moving mechanism 550 to move the fabrication unit 20 in the X direction, and a motor driver 511 that drives a motor constituting a Y-direction scanning mechanism 552 to move the fabrication unit 20 in the Y direction (sub-scanning direction). The controller 500 includes a motor driver 513 that drives a motor constituting a stage X-direction scanning mechanism 553 to move the stage 14 in the X direction together with the moving-up/down member 15, and a motor driver 514 that drives a motor constituting the moving-up/down member 15 to move up and down the stage 14 in the Z direction. It should be noted that the fabrication unit 20 may be moved up and down in the Z direction as described above.

The controller 500 includes a motor driver 516 that drives a motor 26 to rotationally drive the flattening roller 16, and a maintenance driver 518 that drives the maintenance mechanism 61 of the first head 11 and the second head 12.

The controller 500 includes a curing controller 519 that controls the ultraviolet light irradiation by the UV irradiation unit 13.

Detected signals from a temperature/humidity sensor 560 to detect temperature and humidity as environmental conditions of the apparatus and detected signals of other sensors are input to the I/O 507 of the controller 500.

An operation panel 522 to input and display information required for this apparatus is coupled to the controller 500.

As described above, the controller 500 receives fabrication data from the fabrication data creating device 600. The fabrication data is data for creating a fabrication object 17 in each of the fabrication layers 30 (data in the fabrication region) as sliced data obtained by slicing the shape of a target three-dimensional object.

The main controller 500A creates data obtained by adding data in the support region to which the support material is added to the fabrication data (data in the fabrication region), and supplies the data to the head drive controllers 508 and 509. The head drive controllers 508 and 509 respectively discharge droplets of the fabrication material 301 from the first head 11 to the fabrication region, and discharge droplets of the liquid support material 302 from the second head 12 to the support region.

It should be noted that the fabricating apparatus includes the fabrication data creating device 600 and the 3D fabricating apparatus 10.

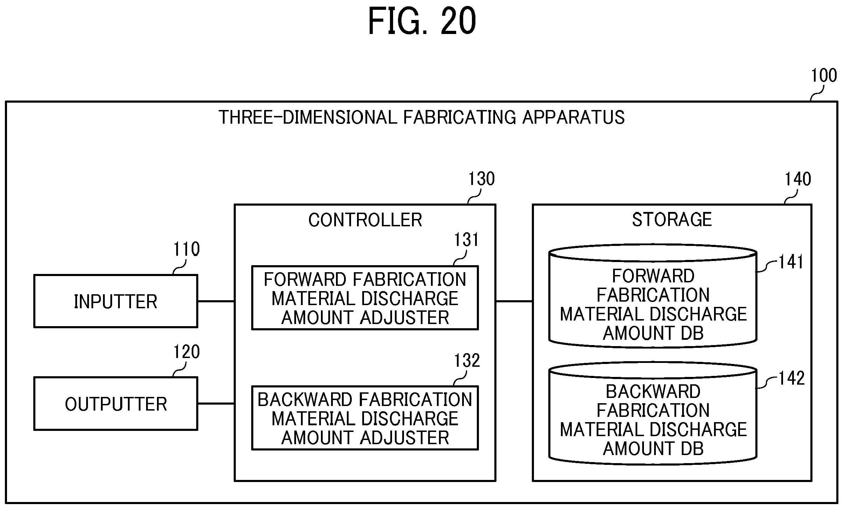

FIG. 20 is a diagram illustrating an example of a functional configuration of a three-dimensional fabricating apparatus 100.

As illustrated in FIG. 20, the three-dimensional fabricating apparatus 100 includes an inputter 110, an outputter 120, a controller 130, and a storage 140.

The controller 130 has a forward fabrication material discharge amount adjuster 131 and a backward fabrication material discharge amount adjuster 132. The controller 130 controls the three-dimensional fabricating apparatus 100.

The storage 140 has a forward fabrication material discharge amount database 141 and a backward fabrication material discharge amount database 142. Hereinafter, the "database" may be referred to as "DB".

The forward fabrication material discharge amount adjuster 131 adjusts the discharge amount of the forward fabrication material to be increased. For example, there are (1) a method including: enlarging a droplet of a forward fabrication material to increase a total discharge amount of the forward fabrication material, and (2) a method including: uniting a plurality of droplets of a forward fabrication material during flying to increase a total discharge amount of the forward fabrication material.

It should be noted that the adjusted information on the discharge amount of the forward fabrication material is stored in a forward fabrication material discharge amount DB 141.

The backward fabrication material discharge amount adjuster 132 adjusts the discharge amount of the backward fabrication material to be increased. For example, there are (1) a method including: enlarging a droplet of a backward fabrication material to increase a total discharge amount of the backward fabrication material, and (2) a method including: uniting a plurality of droplets of a backward fabrication material during flying to increase a total discharge amount of the backward fabrication material.

It should be noted that the adjusted information on the discharge amount of the backward fabrication material is stored in a backward fabrication material discharge amount DB 142.

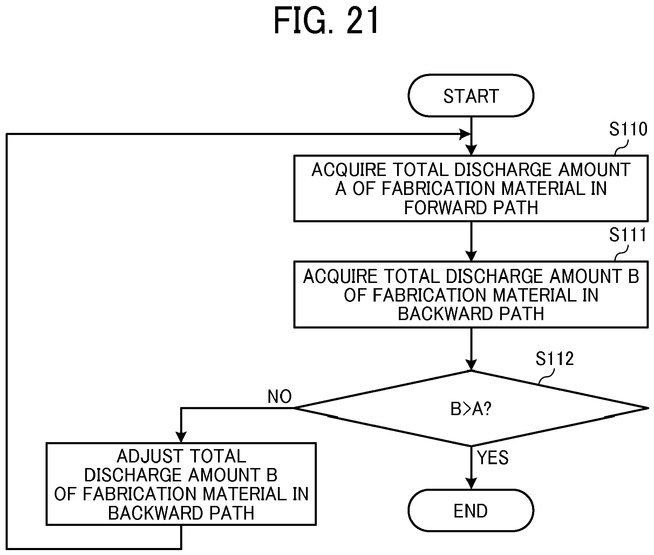

Next, the processing procedure of the three-dimensional fabricating program of the present embodiment will be described. FIG. 21 is a flowchart illustrating a processing procedure of a three-dimensional fabricating program in the controller 130 of the three-dimensional fabricating apparatus 100.

In step S110, when the controller 130 of the three-dimensional fabricating apparatus 100 acquires information data on a total discharge amount A of the fabrication material in the forward path which is stored in the forward fabrication material discharge amount DB 141 of the storage 140, the process proceeds to Sill.

In step Sill, when the controller 130 of the three-dimensional fabricating apparatus 100 acquires information data on a total discharge amount B of the fabrication material in the backward path which is stored in the backward fabrication material discharge amount DB 142 of the storage 140, the process proceeds to S112.

In step S112, when the total discharge amount B of the fabrication material in the backward path is smaller than the total discharge amount A of the fabrication material in the forward path, the process proceeds to S113. Meanwhile, when the total discharge amount B of the fabrication material in the backward path is larger than the total discharge amount A of the fabrication material in the forward path, the present process is terminated.

In step S113, when a process for increasing the discharge amount of the fabrication material in the backward path is performed, and the changed discharge amount of the backward fabrication material is stored in the backward fabrication material discharge amount DB 142, the process is returned to start.

### Three-Dimensional Object

The three-dimensional object is preferably produced by the method for producing a three-dimensional object of the present embodiment.

### Aspects of the present disclosure are, for example, as follows.

<1> A three-dimensional fabricating apparatus includes a forward layer fabricator to discharge a fabrication material in a forward path to form a forward fabrication layer and a backward layer fabricator to discharge a fabrication material in a backward path to form a backward fabrication layer. A total discharge amount of the fabrication material in the backward path is larger than a total discharge amount of the fabrication material in the forward path.
<2> In the three-dimensional fabricating apparatus according to <1>, the forward layer fabricator cures the discharged fabrication material to form the forward fabrication layer.
<3> In the three-dimensional fabricating apparatus according to <1> or <2>, the backward layer fabricator allows a flattener to contact the surface of the backward fabrication material to flatten the backward fabrication material and cures the backward fabrication material to from the backward fabrication layer.
<4> In the three-dimensional fabricating apparatus according to any one of <1> to <3>, a pulse voltage of a droplet of the fabrication material in the backward path is equal to or more than a pulse voltage of a droplet of the fabrication material in the forward path. The droplet of the backward fabrication material is enlarged so that the total discharge amount of the fabrication material in the backward path is larger than the total discharge amount of the fabrication material in the forward path.
<5> In the three-dimensional fabricating apparatus according to any one of <1> to <3>, a pulse number of a droplet of the fabrication material in the backward path before landing is equal to or more than a pulse number of a droplet of the fabrication material in the forward path before landing. A plurality of droplets of the discharged fabrication material in the backward path is united during flying so that the total discharge amount of the fabrication material in the backward path is larger than the total discharge amount of the fabrication material in the forward path.
<6> In the three-dimensional fabricating apparatus according to any one of <1> to <5>, a fabrication material discharging member to discharge a fabrication material is formed by a piezoelectric element.
<7> In the three-dimensional fabricating apparatus according to any one of <1> to <6>, an angle between a wall surface of an end portion of a backward fabrication material and a support supporting a three-dimensional object is 80 degrees or more and 100 degrees or less.
<8> In the three-dimensional fabricating apparatus according to any one of <1> to <7>, a ratio of a distance between a roller and a cured forward fabrication layer is 10% or more with respect to the minimum thickness of a layered object after discharging the backward fabrication material onto the forward fabrication layer.
<9> In the three-dimensional fabricating apparatus according to any one of <1> to <8>, a layered object including the forward fabrication layer and backward fabrication layer is formed by two paths;
<10> In the three-dimensional fabricating apparatus according to <9>, the flattener contacts each of a plurality of layered objects.
<11> In the three-dimensional fabricating apparatus according to any one of <3> to <10>, a deviation in a gravitational direction of the flattener in the forward path and the backward path is 10 µm or less.
<12> In the three-dimensional fabricating apparatus according to <11>, the deviation in the direction of the gravitational force of the flattener is 5 µm or less.
<13> In the three-dimensional fabricating apparatus according to any one of <3> to <12>, the flattener is a roller.
<14> In the three-dimensional fabricating apparatus according to any one of <1> to <13>, the backward fabrication material has a viscosity of 100 mPa·s or less at 25°C.
<15> In the three-dimensional fabricating apparatus according to any one of <1> to <14>, the backward fabrication material has a surface tension of 20 mN/m or more and 45 mN/m or less.
<16> In the three-dimensional fabricating apparatus according to any one of <1> to <15>, a nozzle to discharge the fabrication material in the forward path is the same as a nozzle to discharge the fabrication material in the backward path.
<17> A method for producing a three-dimensional object includes discharging a fabrication material in a forward path to form a forward fabrication layer; and discharging a fabrication material in a backward path to form a backward fabrication layer. A total discharge amount of the fabrication material in the backward path is larger than a total discharge amount of the fabrication material in the forward path.
<18> In the method for producing a three-dimensional object according to <17>, the forward layer fabricating cures the discharged fabrication material to form the forward fabrication layer.
<19> In the method for producing a three-dimensional object according to <17> or <18>, the discharging the fabrication material in the backward path allows a flattener to contact the surface of the backward fabrication material to flatten the backward fabrication material, and cures the backward fabrication material to from a backward fabrication layer;
<20> In the method for producing a three-dimensional object according to any one of <17> to <19>, the discharging the fabrication material in the forward path and the discharging the fabrication material in the backward path are repeated a plurality of times;
<21> In the method for producing a three-dimensional object according to <19> or <20>, the flattener is a roller.
<22> In the method for producing a three-dimensional object according to any one of <17> to <21>, after the first fabrication material is discharged and cured in a fabrication layer, the second fabrication material is discharged and cured in the same fabrication layer to obtain a fabrication object.
<23> In the method for producing a three-dimensional object according to any one of <17> to <21>, the first fabrication material is discharged and cured in a n-th fabrication layer and the second fabrication material is discharged and cured in a (n + m)th fabrication layer to obtain a fabrication object, where n represents a natural number and m represents a positive or negative integer.
<24> In the method for producing a three-dimensional object according to any one of <17> to <21>, the first fabrication material is discharged and cured in a n-th fabrication layer and the second fabrication material is discharged and cured in a (n + 2)th fabrication layer to obtain a fabrication object, where n represents a natural number and m represents a positive or negative integer.
<25> A three-dimensional fabricating program causes a computer to execute processing including: discharging a fabrication material in a forward path to form a forward fabrication layer; discharging a fabrication material in a backward path to form a backward fabrication layer; and adjusting a total discharge amount of the fabrication material in the backward path to be larger than a total discharge amount of the fabrication material in the forward path.

The three-dimensional fabricating apparatus according to any one of <1> to <16>, the method for producing a three-dimensional object according to any one of <17> to <24>, and the three-dimensional fabricating program according to <25> can solve the various problems in the related art and achieve the object of the present disclosure.

Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways. Such variations are not to be regarded as a departure from the scope of the present disclosure and appended claims, and all such modifications are intended to be included within the scope of the present disclosure and appended claims.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. A three-dimensional fabricating apparatus (10, 100) comprising:
a forward layer fabricator (20) configured to discharge a fabrication material (301) in a forward path to form a forward fabrication layer (30); and
a backward layer fabricator (20) configured to discharge a fabrication material (301) in a backward path to form a backward fabrication layer (30),
a controller (500) configured to control the forward layer fabricator (20) and the backward layer fabricator (20) so that a total discharge amount of the fabrication material (301) in the backward path is larger than a total discharge amount of the fabrication material (301) in the forward path.

2. The three-dimensional fabricating apparatus (10, 100) according to claim 1,
wherein the forward layer fabricator (20) cures the discharged fabrication material (301) to form the forward fabrication layer (30).

3. The three-dimensional fabricating apparatus (10, 100) according to claim 1 or 2, further comprising a flattener (16),
wherein the backward layer fabricator (20) causes the flattener (16) to contact the surface of the discharged backward fabrication material (301) to flatten the backward fabrication material (301) and cures the backward fabrication material (301) to from the backward fabrication layer (30).

4. The three-dimensional fabricating apparatus (10, 100) according to any one of claims 1 to 3,
wherein the controller (500) causes a pulse voltage of a droplet of the fabrication material (301) in the backward path to be equal to or more than a pulse voltage of a droplet of the fabrication material (301) in the forward path and increases a size of the droplet of the fabrication material (301) in the backward path so that the total discharge amount of the fabrication material (301) in the backward path is larger than the total discharge amount of the fabrication material (301) in the forward path.

5. The three-dimensional fabricating apparatus (10, 100) according to any one of claims 1 to 3,
wherein the controller (500) causes a pulse number of a droplet of the fabrication material (301) in the backward path before landing to be equal to or more than a pulse number of a droplet of the fabrication material (301) in the forward path before landing and causes a plurality of droplets of the fabrication material (301) discharged in the backward path to be united during flying so that the total discharge amount of the fabrication material (301) in the backward path is larger than the total discharge amount of the fabrication material (301) in the forward path.

6. The three-dimensional fabricating apparatus (10, 100) according to any one of claims 1 to 5,
wherein the controller (500) causes the forward layer fabricator (20) and the backward layer fabricator (20) to form a layered object including the forward fabrication layer (30) and the backward fabrication layer (30) by two paths.

7. The three-dimensional fabricating apparatus (10, 100) according to any one of claims 1 to 5,
wherein the controller (500) causes the forward layer fabricator (20) and the backward layer fabricator (20) to form a plurality of layered objects, each layered object including the forward fabrication layer (30) and the backward fabrication layer (30), and
wherein the flattener (16) contacts each layered object.

8. The three-dimensional fabricating apparatus (10, 100) according to any one of claims 3 to 7,
wherein a deviation in a gravitational direction of the flattener (16) between the forward path and the backward path is 10 µm or less.

9. The three-dimensional fabricating apparatus (10, 100) according to any one of claims 1 to 15,
wherein a nozzle to discharge the fabrication material in the forward path is same as a nozzle to discharge the fabrication material in the backward path.

10. A method for producing a three-dimensional object comprising:
discharging a fabrication material in a forward path to form a forward fabrication layer;
discharging a fabrication material in a backward path to form a backward fabrication layer; and
adjusting a total discharge amount of the fabrication material in the backward path to be larger than a total discharge amount of the fabrication material in the forward path.

11. The method according to claim 10, further comprising repeating the discharging the fabrication material in the forward path and the discharging the fabrication material in the backward path a plurality of times.

12. The method according to claim 10,
wherein after the first fabrication material is discharged and cured in a fabrication layer, the second fabrication material is discharged and cured in the same fabrication layer to obtain a fabrication object.

13. The method according to claim 10 or 11,
wherein the first fabrication material is discharged and cured in a n-th fabrication layer and the second fabrication material is discharged and cured in a (n + m)th fabrication layer to obtain a fabrication object, where n represents a natural number and m represents a positive or negative integer.

14. The method according to claim 10 or 11,
wherein the first fabrication material is discharged and cured in a n-th fabrication layer and the second fabrication material is discharged and cured in a (n + 2)th fabrication layer to obtain a fabrication object, where n represents a natural number and m represents a positive or negative integer.

15. A carrier medium carrying computer readable code for controlling a computer to carry out the method according to any one of claims 10 to 14.
